# EUROPEAN PATENT SPECIFICATION

(11) **EP 2 187 633 B1**
(45) Date of publication and mention of the grant of the patent: **20.07.2011**
(21) Application number: 09006281.1
(22) Date of filing: 08.05.2009
(51) Int. Cl.: H04N 5/765, H04N 5/775, H04N 9/82, H04N 5/44

(54) **Program recording controller and program recording control method**
Programmaufzeichnungssteuergerät und Programmaufzeichnungssteuerverfahren
Contrôleur d'enregistrement de programme et procédé de contrôle d'enregistrement de programme

(30) Priority: 12.11.2008 JP 2008290294
(43) Date of publication of application: 19.05.2010
(73) Proprietor: Kabushiki Kaisha Toshiba, Minato-ku, Tokyo 105-8001 (JP)
(72) Inventor: Yoshida, Osamu, Tokyo 105-8001 (JP)
(74) Representative: HOFFMANN EITLE

(56) References cited:
- EP-A2- 0 789 488
- EP-A2- 1 292 135
- US-A1- 2002 184 637
- US-A1- 2007 077 028

## Description

### BACKGROUND

### 1. Field

One embodiment of the invention relates to a program recording controller that controls recording of digital broadcast including digital terrestrial broadcast and digital satellite broadcast, and a program recording control method.

### 2. Description of the Related Art

Recorders that record a program on DVD or HOD have been commonly used. Further, there has been proposed a technology in which, when a user is setting schedules to record a program, available storage capacity of the storage medium is calculated to notify the user whether the program can be scheduled to be recorded (see Japanese Domestic Republication of PCT International Application No. 2002/028100).

Besides, recorders with a plurality of tuners have also been used that are capable of simultaneously recording a plurality of programs. For example, there has been proposed a technology in which, to simultaneously record a plurality of programs, the total bit rate is obtained from the bit rate of each program based on an electronic program guide (EPG), and the number of programs to be recorded is determined such that the total bit rate does not exceed the memory processing capacity (see Japanese Patent Application Publication (KOKAI) No. 2000-217063).
US 2002/0184637 A1 shows a system and method for improved multi-stream multimedia transmission and processing, which provides multi-stream buffers of e.g. 2 hours, and wherein each tuner 320 and 321 corresponds to a respective multi-stream buffer 361 and 362. US 2002/0184637 A1 further shows to associate time information with address pointers in the multimedia stream.
EP 1 292 135 A2 shows a program record/playback system relating to a vehicle audio system with two tuners, a broadcast program record and playback unit, and a system control unit that assigns delimiter signals to breakpoints, and wherein the broadcast contents is determined to be news, talks, music and CM based on the respective frequency bands.
D3, US 2007/0077028 A1 shows a receiver for television signals, which comprises first and second tuners and a hard disk, which is controlled by a processor. The hard disk comprises two storage areas, one for the storage of television program data and the other for storing metadata, which are in the form of an indicator pointing at the beginning of a recorded television program, whereby the indicator data is based on the standard time codes transmitted with television program signals.

In recent years, with a significant increase in the capacity of HDD provided to the recorders, automatic recording has been attracting attention more attention. The automatic recording indicates a function of a recorder to automatically record predetermined channels according to predetermined conditions. The automatic recording function saves the user the need to manually set schedules to record desired programs one by one. For example, with the automatic recording function, all programs broadcast during one week can be recorded on HDD with respect to all channels that the recorder can receive.

If, however, all programs broadcast during one week have been recorded on HDD with respect to all channels that the recorder can receive, the user needs to select a program that he/she desires to view. That is, since the user has not specify a program to be recorded, the user is required to search and select a desired program from all the programs recorded for a week. This is cumbersome for the user.

It is therefore an object of the invention to provide a program recording controller and a program recording control method capable of facilitating the selection of a desired program from all programs that has been recorded for a predetermined period of time.

### SUMMARY OF THE INVENTION

To overcome the problems and achieve the object mentioned above, according to an aspect of the invention, a program recording controller is defined by the appended claim 1.

According to another aspect of the invention, there is provided a program recording control method according to the appended claim 4.

As described above, according to an aspect of the invention, it is possible to facilitate the selection of a desired program from all programs that has been recorded for a predetermined period of time.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram of a digital recorder according to an embodiment of the invention;
FIG. 2 an exemplary schematic diagram for explaining remultiplexing method in the embodiment;
FIG. 3 is an exemplary schematic diagram of the data structure of a program database in the embodiment;
FIG. 4 is an exemplary schematic diagram of the data structure of metadata in the embodiment;
FIG. 5 is an exemplary front view of a remote controller in the embodiment;
FIG. 6 is an exemplary schematic diagram of a program guide in the embodiment;
FIG. 7 is an exemplary flowchart of a program display process in the embodiment;
FIG. 8 is an exemplary flowchart of a reproducing process in the embodiment;
FIG. 9 is an exemplary flowchart of a special reproduction process in the embodiment;
FIG. 10 is an exemplary schematic diagram for explaining screen transition by channel zapping function or program skip function in the embodiment; and
FIG. 11 is an exemplary block diagram of a digital recorder according to a modification of the embodiment.

### DETAILED DESCRIPTION

Various embodiments according to the invention will be described hereinafter with reference to the accompanying drawings.

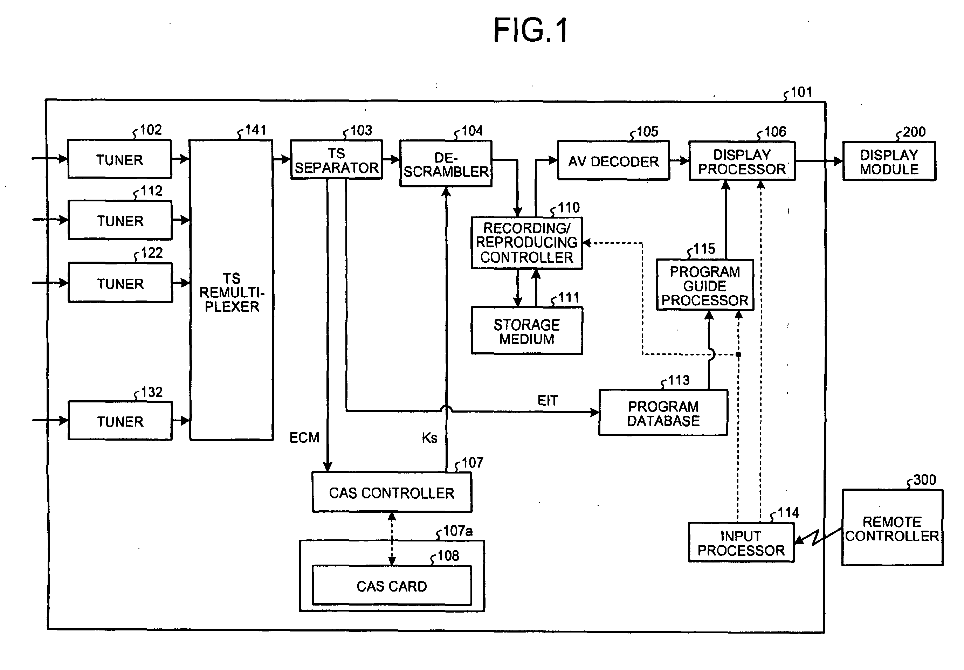

An embodiment of the invention will be described with reference to FIGS. 1 to 11. A program recording controller of the embodiment is described by way of example as a digital recorder.

FIG. 1 is a block diagram of a digital recorder 101 according to the embodiment. It is assumed herein that the digital recorder 101 is provided with four tuner modules as receivers each for receiving a scrambled digital broadcast signal (of which two are tuners 102 and 112 for receiving digital terrestrial broadcasting and the other two are tuners 122 and 132 for receiving BS/CS digital broadcasting).

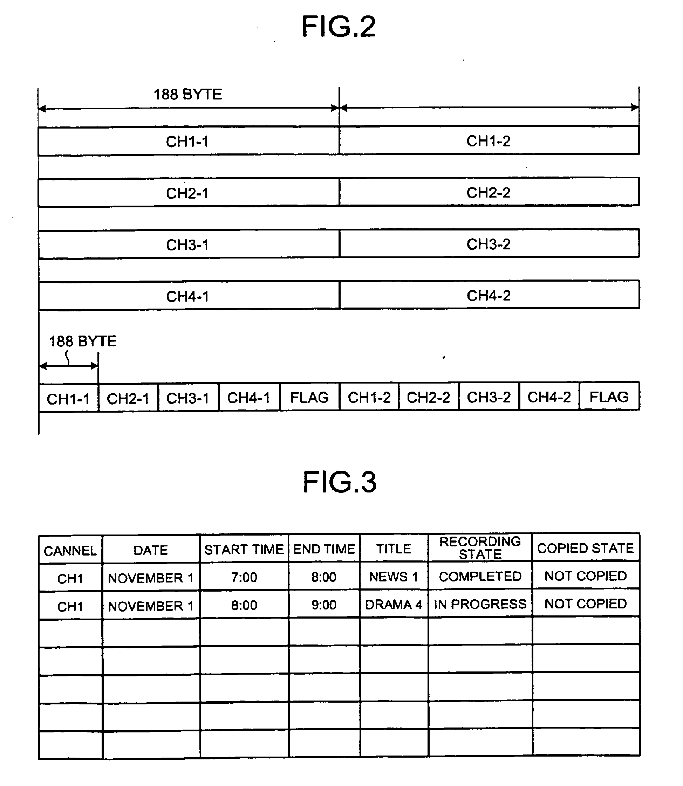

The tuners 102, 112, 122, and 132 receive broadcast program signals. The broadcast program signals are input to a transport stream (TS) remultiplexer 141. The TS remultiplexer 141 remultiplexes transport streams of multiple channels (CH) into one transport stream. For example, in the case of input of four channels as illustrated in FIG. 2, the TS remultiplexer 141 may perform remultiplexing at five times higher speed. Further, the TS remultiplexer 141 may add timestamp information as a flag to each packet. The signals remultiplexed by the TS remultiplexer 141 is sent to a TS separator 103.

The TS separator 103 separates from the broadcast program signals an entitlement control message (ECM) as encryption data. The TS separator 103 also separates from the broadcast program signals an event information table (EIT) that describes event information. Examples of the event information include program title, cast, and program start time.

The ECM obtained by the TS separator 103 is sent to a CAS controller 107. The CAS controller 107 decodes the encrypted ECM using a work key (Kw) set with respect to each of broadcast providers. The work key is stored in a CAS module, i.e., a CAS card in the form of an IC card (hereinafter "CAS card") 108 configured to be inserted in a card slot or card interface (I/F) 107a. The CAS controller 107 then compares attribute information related to the program in the ECM with contract information stored in the CAS card 108 to determine whether the program can be viewed. If the program can be viewed, the CAS controller 107 decodes a scramble key (Ks), and outputs it to a descrambler 104. Although the encryption keys (Ks and Kw) vary according to the broadcast providers, the keys are shared among all receivers.

On the other hand, the EIT obtained by the TS separator 103 is input to a program database 113. The program database 113 creates a database for creating a program guide using the EIT. FIG. 3 is a schematic diagram of the data structure of the program database 113. As illustrated in FIG. 3, the program database 113 stores information in a tabular format with respect to each program. Examples of the information include cannel, date, start time, end time, title, recording state, and copied state.

The descrambler 104 sets the scramble key Ks received from the CAS controller 107, and descrambles the transport stream. The descrambler 104 then input the descrambled transport stream to a recording/reproducing controller 110.

The recording/reproducing controller 110 demultiplexes the remultiplexed transport stream into transport streams of the respective channels, and stores them in a storage medium 111 such as an HDD. The recording/reproducing controller 110 also controls the reproduction of broadcast program signals stored as a transport stream in the storage medium 111, and outputs the broadcast program signals to an AV decoder 105. That is, the recording/reproducing controller 110 functions as a recording controller as well as a reproducing controller.

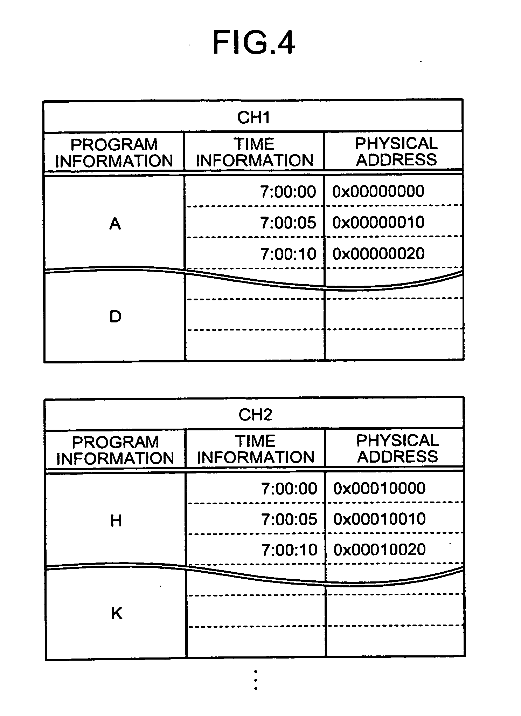

Upon storing the broadcast program signals (demultiplexed transport streams of the respective channels) in the storage medium 111, the recording/reproducing controller 110 creates metadata with respect to each of the channels. As illustrated in FIG. 4, the metadata contains a storage position or a record position in the physical area of the storage medium 111 where the broadcast program signals are stored (physical address), time information, and program information associated with one another. Thus, the recording/reproducing controller 110 stores the metadata in the storage medium 111. In the example of FIG. 4, the storage position (physical address) is stored every five seconds. Incidentally, the program information can be obtained from the EIT.

The storage medium 111 may be, for example, HDD, disk drive, SD (registered trademark) card reader/writer. The storage medium 111 stores the broadcast program signals, i.e., the transport streams, received from the recording/reproducing controller 110. The storage medium 111 need not necessarily be built in the digital recorder 101, and may be the one such as an external HDD connected to the digital recorder 101 through USB, LAN, or the like.

The AV decoder 105 decodes the broadcast program signals from the respective channels (demultiplexed transport streams of the respective channels) received by the tuners 102, 112, 122, and 132 into AV data (video data and audio data). Alternatively, the AV decoder 105 decodes the broadcast program signals (demultiplexed transport streams of the respective channels), the reproduction of which has been controlled by the recording/reproducing controller 110, into AV data.

The AV data output from the AV decoder 105 (AV output) is input via a display processor 106 to a display module 200. The display module 200 is an external monitor. The display processor 106 has graphical user interface (GUI) function to provide information to the user through on-screen display (OSD), or the like. With this GUI function, a program guide, which will be described later, is displayed on the display module 200.

The program database 113 sends EIT of a program stored in the storage medium 111 and EIT of a program to be broadcast to a program guide processor 115. Upon receipt of the EIT, the program guide processor 115 creates a program guide.

An input processor 114 receives various types of input from the user. Examples of the input that the input processor 114 receives from the user include a setting for automatic recording and an instruction specifying a program in a program guide to reproduce. The input processor 114 may receive user input through an operation panel (not illustrated) or the like fixed to the digital recorder 101, or through a remote controller 300 separately provided to the digital recorder 101.

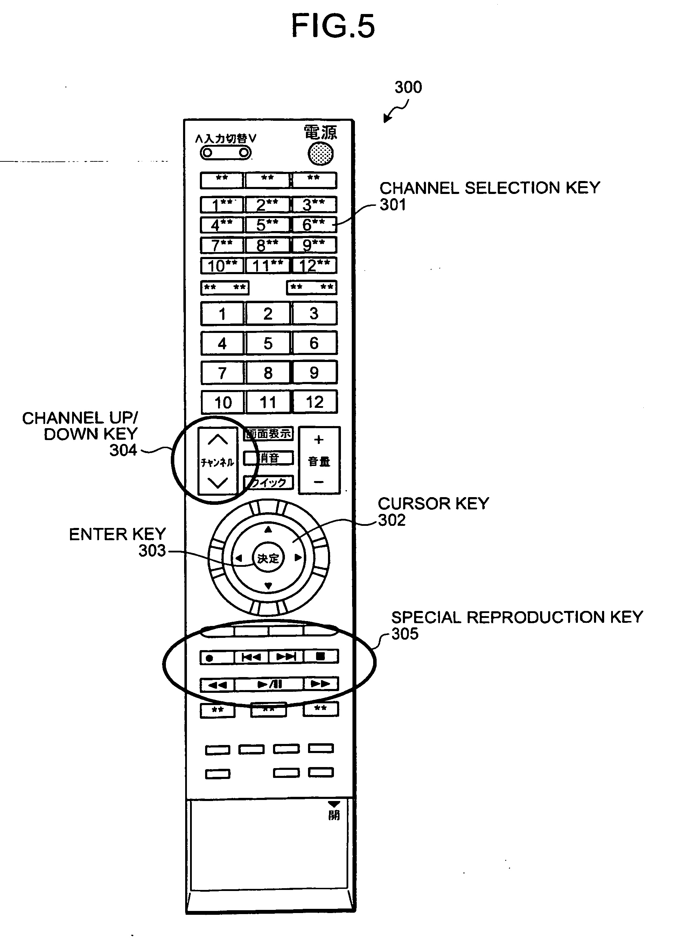

FIG. 5 is a front view of the remote controller 300. As illustrated in FIG. 5, on the remote controller 300 are arranged channel selection keys 301, a cursor key 302, an enter key 303, a channel up/down key 304, special reproduction keys 305, and the like. The channel selection keys 301 is used to select a channel. The cursor key 302 is used to move a cursor up, down, left, and right. The enter key 303 is used to confirm some operations and instructions. The channel up/down key 304 is used to select a channel. The special reproduction keys 305 are used to instruct special reproduction. The special reproduction keys 305 include a fast forward key, a rewind key, a skip backward key, a skip forward key, and the like.

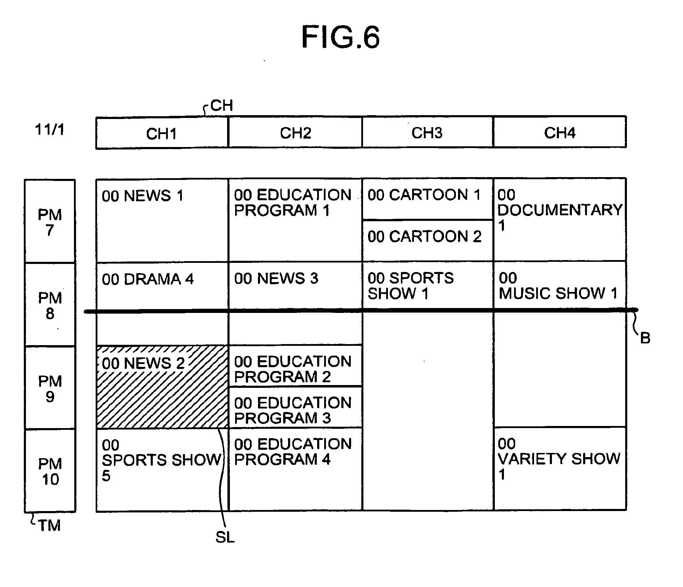

FIG. 6 illustrates an example of a program guide. When recorded programs are displayed with respect to time including a predetermined time, for example, as illustrated in FIG. 6, a time axis is set in the vertical direction of the screen. Then, broadcast time fields TM are arranged along the time axis. Besides, channel fields CN are arranged in the direction perpendicular to the time axis. Thus, the program guide provides program information indicating a recorded program at a position corresponding to a relevant broadcast time field and a relevant channel field. In addition, in the center of the screen in the vertical direction, i.e., in the center of the program guide, a bar B is displayed to indicate the current time. With the display of the bar B indicating the current time, programs that have already been broadcast can be distinguished from those yet to be broadcast. These programs may be displayed in different colors so that programs that have already been broadcast can be distinguished from those yet to be broadcast. Such a program guide, in which programs are displayed with respect to time including a predetermined time, is effective in, for example, displaying programs recorded or to be recorded during a period in which all broadcast programs are set to be recorded.

On the program guide, the user can move the cursor by, for example, pressing the cursor key 302 on the remote controller 300 to select a field. As illustrated in FIG. 6, by moving the cursor from one field to another, i.e., by changing a selected field SL, the user can scroll the display screen. This allows the user to search for a recorded program.

When the user changes the selected field SL, the display screen may be scrolled such that the selected field SL is displayed in the center of the program guide, or the selected field SL may be moved on the display screen.

Further, for example, when the user places the cursor on the field of a desired program and then presses the enter key 303 on the remote controller 300, detailed information may be displayed as to the program. Thus, the user can obtain the detailed information on a recorded program or a program that he/she wishes to record. Incidentally, the user can selectively delete programs stored in the storage medium 111 through the program information displayed in the program guide.

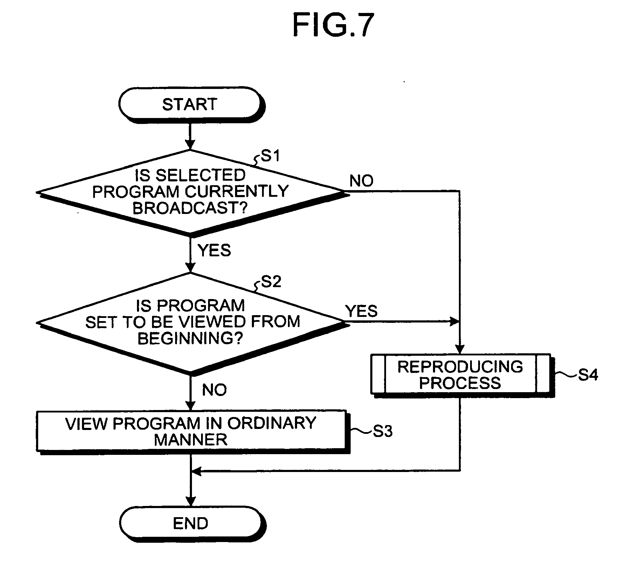

With reference to FIGS. 7 to 10, a description will now be given of a program display process using a program guide performed on the digital recorder 101.

Described below is the case where a program currently broadcast is selected. As illustrated in FIG. 7, when a program currently broadcast is selected by using the enter key 303 on the remote controller 300 (Yes at S1), if "the program is viewed from the beginning" is not selected in the operation settings specified in advance (No at S2), the program is viewed in an ordinary manner (S3) . When a program is viewed in an ordinary manner, the digital recorder 101 inputs demultiplexed transport streams of the respective channels in the AV decoder 105, thereby displaying the video of the program on the display module 200 at the time.

Described below is the case where a program broadcast in the past is selected. When a program broadcast before the current time is selected by using the enter key 303 on the remote controller 300 (No at S1), the digital recorder 101 enters a mode in which a program stored in the storage medium 111 is reproduced, and thus a reproducing process is performed (S4).

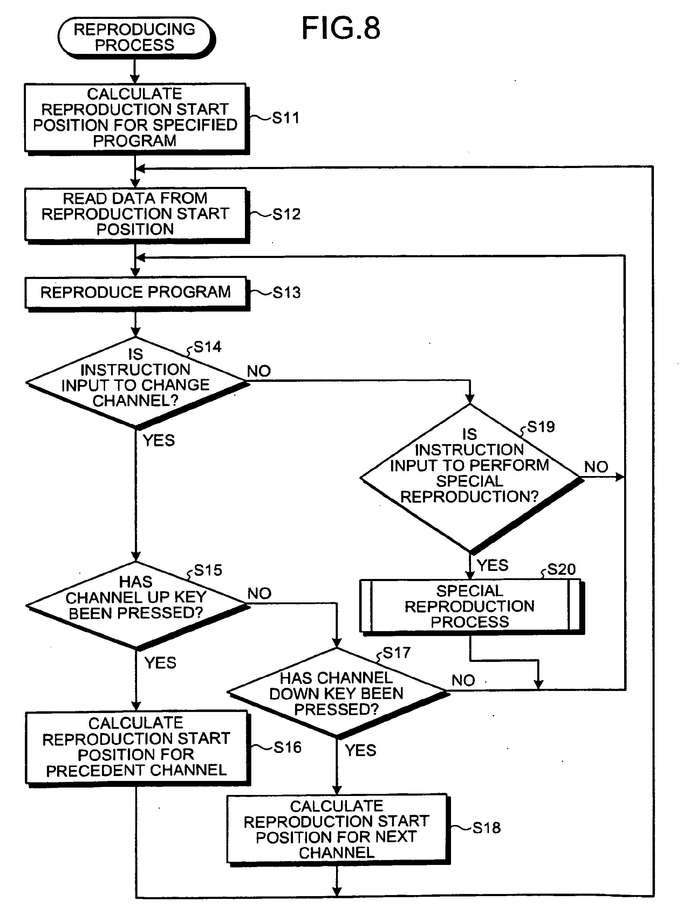

As illustrated in FIG. 8, in the reproducing process, the recording/reproducing controller 110 retrieves from the storage medium 111 metadata corresponding to the channel of the program selected from the program guide and the start time thereof. The recording/reproducing controller 110 then calculates a reproduction start position for the program based on the metadata (S11). The recording/reproducing controller 110 reads data (TS) of the reproduction start position thus calculated from the storage medium 111 (S12) . Thereafter, the recording/reproducing controller 110 inputs the data (TS) to the AV decoder 105 to display or reproduce the program on the display module 200 (S13).

If, while the recorded program is being reproduced, an instruction is issued to change or switch the channel from one to another by using the channel up/down key 304 (a key used to select a channel when a program is viewed in an ordinary manner) on the remote controller 300 (Yes at S14), it is determined whether the instruction is issued to bring up the channel, i.e., the channel up key 304 has been pressed (S15). When the instruction is issued to bring up the channel (Yes at S15), a reproduction start position is calculated for the precedent channel based on the time information contained in the metadata as illustrated in FIG. 4 corresponding to the signals of the broadcast program being reproduced (S16). Then, the process returns to S12 to switch streams to reproduce. More specifically, the recording/reproducing controller 110 reads from the storage medium 111 data (TS) based on a reproduction start position of a channel, to which an instruction has been received to change the channel, at the same time as the calculated reproduction start position (S12). The recording/reproducing controller 110 inputs the data (TS) to the AV decoder 105 to display or reproduce a program selected from the program guide on the display module 200 (S13).

On the other hand, when the instruction is issued to bring down the channel, i.e., the channel down key 304 has been pressed (No at S15, and Yes at S17), a reproduction start position is calculated for the next channel based on the time information contained in the metadata as illustrated in FIG. 4 corresponding to the signals of the broadcast program being reproduced (S18). Then, the process returns to S12 to switch streams to reproduce. More specifically, the recording/reproducing controller 110 reads from the storage medium 111 data (TS) based on a reproduction start position of a channel, to which an instruction has been received to change the channel, at the same time as the calculated reproduction start position (S12). The recording/reproducing controller 110 inputs the data (TS) to the AV decoder 105 to display or reproduce a program selected from the program guide on the display module 200 (S13).

With this, a program that has already been recorded can be searched for by a sort of channel surfing or zapping as in the case of selecting a program to view in an ordinary manner. Thus, it is possible to facilitate the selection of a desired program from all programs that has been recorded for a predetermined period of time.

Incidentally, the position to start reproduction when channels are switched need not necessarily be the same time as that before the channel change. For example, the program may be reproduced from the beginning based on the time information contained in the metadata. This may be selected by user settings.

That is, the reproduction start position may be calculated as a position corresponding to the same time as when a grogram of a cannel currently being reproduced is recorded, the start position of a program of a channel to which the channel is to be changed, or an arbitrary offset position where a predetermined time has elapsed since the start position.

Besides, an instruction is issued to perform special reproduction by using one of the special reproduction keys 305 on the remote controller 300 (No at S14, and Yes at S19), the special reproduction process is performed (S20).

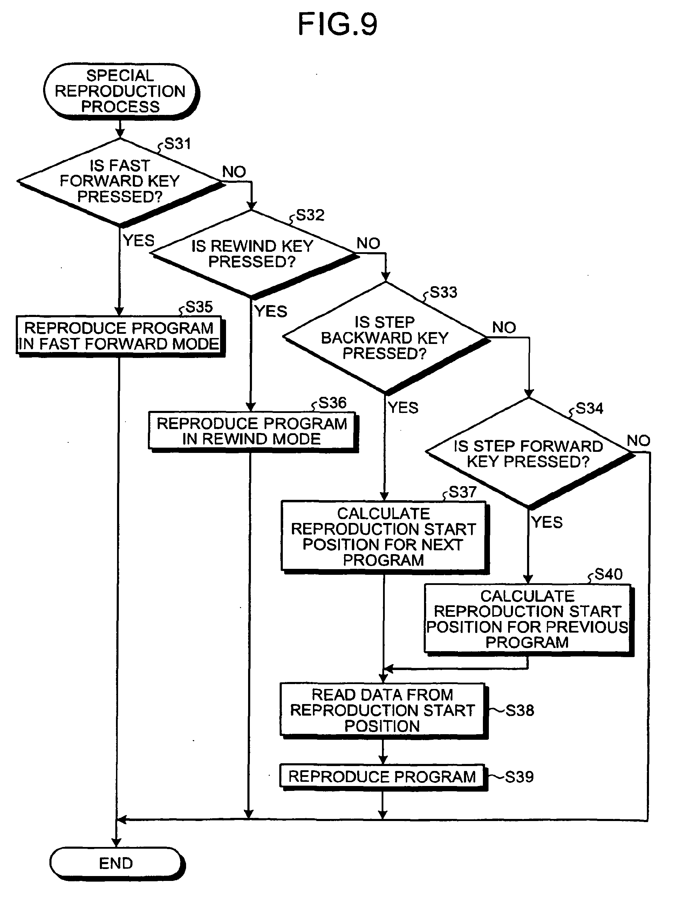

As illustrated in FIG. 9, if, as special reproduction, fast forward is instructed by pressing the fast forward key among the special reproduction keys 305 on the remote controller 300 (Yes at S31), the program is reproduced in fast forward mode (S35). If rewind is instructed by pressing the rewind key among the special reproduction keys 305 on the remote controller 300 (Yes at S31), the program is reproduced in rewind mode (S36).

In addition, if an instruction is issued to skip to the next program of the same channel by pressing the skip backward key among the special reproduction keys 305 on the remote controller 300 (Yes at S33), the record position of the next program is calculated as the reproduction start position based on the program information contained in the metadata corresponding to the signals of the broadcast program being reproduced (S37). Then, the recording/reproducing controller 110 reads data (TS) of the reproduction start position thus calculated from the storage medium 111 (S38). Thereafter, the recording/reproducing controller 110 inputs the data (TS) to the AV decoder 105 to display or reproduce the program selected from the program guide on the display module 200 (S39).

Further, if an instruction is issued to skip to the previous program of the same channel by pressing the skip forward key among the special reproduction keys 305 on the remote controller 300 (Yes at S34), the record position of the previous program is calculated as the reproduction start position based on the program information contained in the metadata corresponding to the signals of the broadcast program being reproduced (S40). Then, the recording/reproducing controller 110 reads data (TS) of the reproduction start position thus calculated from the storage medium 111 (S38). Thereafter, the recording/reproducing controller 110 inputs the data (TS) to the AV decoder 105 to display or reproduce the program selected from the program guide on the display module 200 (S39).

This program skip function further facilitates the selection of a desired program from all programs that has been recorded for a predetermined period of time.

Moreover, if the user selects a previous program or instructs to rewind, skip, etc. to a previous program while he/she is viewing a program currently broadcast, the record position of the previous program is calculated as the reproduction start position based on the metadata. Thus, the user can switch to the reproduction of a recorded program from the position.

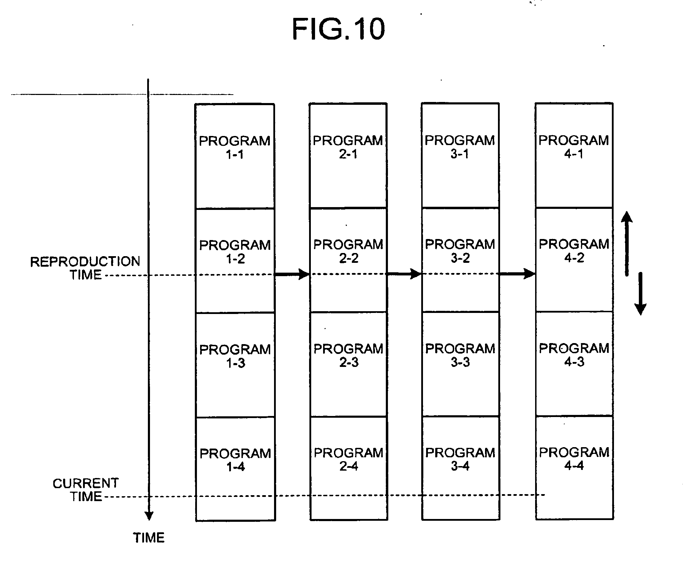

FIG. 10 is a schematic diagram for explaining screen transition caused by the channel surfing or zapping function, or the program skip function. In the example of FIG. 10, an instruction is issued to switch channels (CH1 → CH2 → CH3 → CH4) by using the channel up/down key 304 on the remote controller 300 while a program 1-2 recorded before the current time is being reproduced. In this case, according to time management while a program is being reproduced, recorded programs 2-2, 3-2, and 4-2 are sequentially reproduced. If, for example, an instruction is issued to skip to the next program by pressing the skip backward key among the special reproduction keys 305 on the remote controller 300 while the programs 4-2 is being reproduced, a program 4-3 is reproduced. On the other hand, if an instruction is issued to skip to the previous program by pressing the skip forward key among the special reproduction keys 305 on the remote controller 300, the storage medium 111 is rewound to its beginning to reproduce a program 4-1.

In this manner, with the program display process using a program guide, a program to reproduce can be searched for by a sort of channel surfing or zapping as in the case of selecting a program to view in an ordinary manner. Further, with the addition of the program skip function, retrieval of a program can be further facilitated.

Described below is the case where a program broadcast in the future is selected. When a program broadcast after the current time is selected by using the enter key 303 on the remote controller 300, if the digital recorder 101 is provided with detailed information on the program or is additionally provided with personal video recorder (PVR) function, it displays a menu to set schedules to record the program on the PVR.

As described above, according to the embodiment, upon receipt of an instruction to change the channel through the input processor 114 while a broadcast program stored in the storage medium 111 is being reproduced, the recording/reproducing controller 110 calculates the reproduction start position. The reproduction start position may be calculated as a position corresponding to the same time as when the grogram of a cannel currently being reproduced is recorded, the start position of a program of a channel to which the channel is to be changed, or an arbitrary offset position where a predetermined time has elapsed since the start position. Then, the recording/reproducing controller 110 reads from the storage medium 111 the signals of the broadcast program with respect to the channel to which the channel is to be changed. Thus, a program that has already been recorded can be searched for by a sort of channel surfing or zapping as in the case of selecting a channel to view a program in an ordinary manner. Therefore, it is possible to facilitate the selection of a desired program from all programs that has been recorded for a predetermined period of time.

More specifically, upon storing broadcast program signals received by the tuners 102, 112, 122, and 132 in the storage medium 111, the recording/reproducing controller 110 creates metadata with respect to each of the channels. The metadata contains a storage position in the physical area of the storage medium 111 (physical address), time information, and program information associated with one another. The recording/reproducing controller 110 also stores the metadata in the storage medium 111. Upon receipt of an instruction to change the channel while the broadcast program signals stored in the storage medium 111 are being reproduced, the recording/reproducing controller 110 calculates the record position of a program of a channel to which the channel is to be changed as the reproduction start position based on the time information contained in the metadata corresponding to the signals of the broadcast program being reproduced. Then, the recording/reproducing controller 110 reads the broadcast program signals of the reproduction start position from the storage medium 111. Thus, a program that has already been recorded can be searched for by a sort of channel surfing or zapping as in the case of selecting a channel to view a program in an ordinary manner. Therefore, it is possible to facilitate the selection of a desired program from all programs that has been recorded for a predetermined period of time.

Besides, the storage medium 111 stores the metadata that further contains, in addition to a storage position (physical address) and time information, program information associated thereto. Therefore, upon receipt of an instruction to switch broadcast programs of the same channel while the broadcast program signals stored in the storage medium 111 are being reproduced, the recording/reproducing controller 110 calculates the record position of the program, to which the broadcast program is to be switched, based on the program information contained in the metadata corresponding to the signals of the broadcast program being reproduced. Then, the recording/reproducing controller 110 reads the broadcast program signals of the reproduction start position from the storage medium 111. With this addition of the program skip function, it is possible to further facilitate the selection of a desired program from all programs that has been recorded for a predetermined period of time.

Although the program recording controller of the embodiment is described above by way of example as the digital recorder 101, it is not limited to such a digital recorder. For example, the program recording controller of the embodiment may be a digital television.

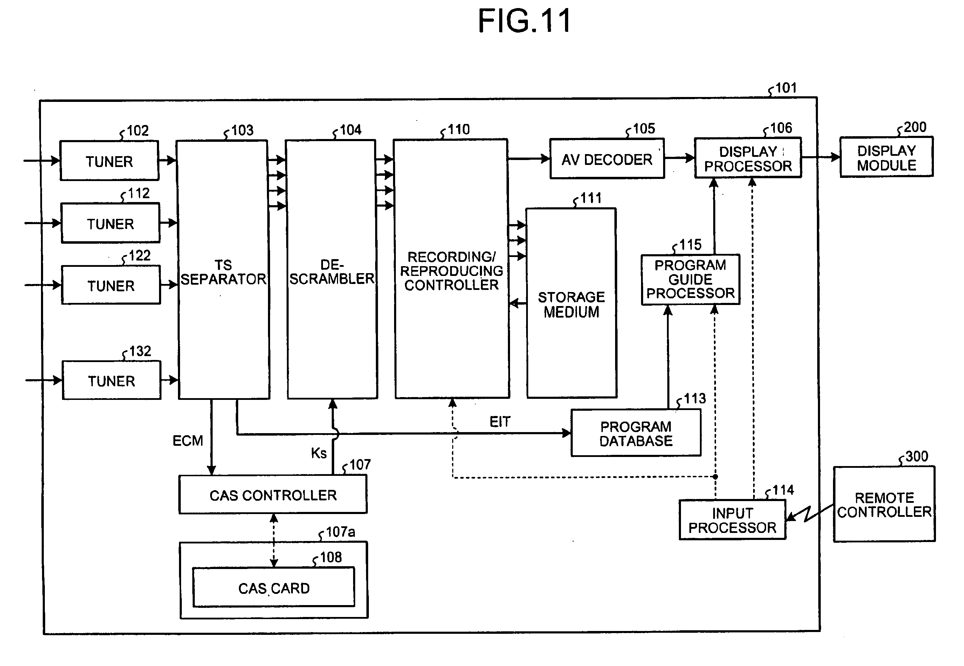

In the embodiment described above, broadcast program signals received by the tuners 102, 112, 122, and 132 are input to the TS remultiplexer 141. The TS remultiplexer 141 remultiplexes transport streams of multiple channels (CH) into one transport stream. After that, the TS remultiplexer 141 sends the transport stream to the TS separator 103. However, this is by way of example and not by way of limitation. As illustrated in FIG. 11, broadcast program signals received by the tuners 102, 112, 122, and 132 may be directly sent to the TS separator 103.

The constituent elements of the digital recorder 101, such as the tuners 102, 112, 122, and 132, the TS remultiplexer 141, the TS separator 103, the CAS controller 107, the descrambler 104, the recording/reproducing controller 110, the AV decoder 105, the program database 113, the program guide processor 115, and the display processor 106, may be implemented as hardware. The constituent elements may also be implemented as software. In other words, a software program stored in a storage module (not illustrated) may be executed by a controller such as CPU (not illustrated) on a computer to realize the same function as the digital recorder 101.

The various modules of the system described herein can be implemented as software applications, hardware and/or software modules, or components on one or more computers, such as servers. While the various modules are illustrated separately, they may share some or all of the same underlying logic or code.

While certain embodiments of the invention have been described, these embodiments have been presented by way of example only, and are not intended to limit the scope of the invention. Indeed, the novel method and system described herein may be embodied in a variety of other forms; furthermore, various omissions, substitutions and changes in the form of the method and system described herein may be made without departing from the scope of the invention as defined by the appended claims.

## Claims

1. A program recording controller (101), comprising:
a plurality of receivers (102, 112, 122, 132) configured to receive transport streams (TS) of digital broadcasting signals of broadcast programs from multiple channels, respectively;
a recording controller (110) configured to control recording of the digital broadcasting signals received by the receivers (102, 112, 122, 132) on a recording medium (111) and to create metadata with respect to each of the channels to record in the recording medium (111), the metadata containing a record position in the recording medium (111), time information, and program information obtained from an event information table (EIT) of the transport streams associated with one another;
an input processor (114) configured to receive input of instructions, the input processor (114) being connected to a channel up/down key (304) to receive input of instructions to bring up or bring down the channel and a skip key to receive input of instructions to skip to the next program or the previous program of the same channel;
a reproducing controller (110) configured to control reproduction of the digital broadcasting signals of the broadcast programs recorded on the recording medium (111) or the digital broadcasting signals of the broadcast programs that the receivers (102, 112, 122, 132) has received from the channels, respectively; and a display processor (106) configured to output the digital broadcasting signals of the broadcast programs, the reproduction of which has been controlled by the reproducing controller (110), to a display module (200), wherein
when receiving an instruction to switch channels through the channel up/down key (304) while a broadcast program recorded on the recording medium (111) is being reproduced, the reproducing controller (110) calculates a reproduction start position in the recording medium (111) of digital broadcasting signals of a broadcast program from a channel, to which a channel of the broadcast program being reproduced is to be switched, as the record position corresponding to the time information of the metadata of the digital broadcasting signals of the broadcast program being reproduced, to read the recording medium (111), and
when receiving an instruction to skip programs through the skip key while a broadcast program recorded on the recording medium (111) is being reproduced, the reproducing controller (110) calculates a reproduction start position in the recording medium (111) of digital broadcasting signals of a broadcast program from a program, to which a program of the broadcast program being reproduced is to be skipped, as the record position corresponding to a start position of a program obtained from the program information of the metadata of the digital broadcasting signals of a broadcast program, to which a program is skipped based on the program information of the metadata of the digital broadcasting signals of the broadcast program being reproduced, to read the recording medium (111).

2. The program recording controller (101) of Claim 1, further comprising a remultiplexer (141) configured to remultiplex the signals of the broadcast programs from the channels received by the receivers (102, 112, 122, 132), respectively, into a signal, wherein
the reproducing controller (110) is configured to control the reproduction of the signals after the signal is demultiplexed into the signals of the broadcast programs from the channels.

3. The program recording controller (101) of Claim 1, further comprising a display module (200) configured to display the signals of the broadcast programs received from the display processor (106).

4. A program recording control method applied to a program recording controller comprising a controller and a recording medium, the program recording control method comprising the steps of:
controlling, at a recording controller (110), recording of the digital broadcasting signals received by a plurality of receivers that receive transport streams (TS) of digital broadcasting signals of broadcast programs from multiple channels, respectively on a recording medium;
creating of metadata with respect to each of the channels to record in the recording medium, the metadata containing a record position in the recording medium, time information, and program information obtained from an event information table (EIT) of the transport streams associated with one another;
controlling, at a reproducing controller (110), reproduction of the digital broadcasting signals of the broadcast programs recorded on the recording medium or the digital broadcasting signals of the broadcast programs that the receivers has received from the channels, respectively, according to an instruction received by a channel up/down key to receive input of instructions to bring up or bring down the channel and a skip key to receive input of instructions to skip to the next program or the previous program of the same channel; and
outputting, at a display processor (106), the digital broadcasting signals of the broadcast programs, the reproduction of which has been controlled by the reproducing controller, to a display module, wherein
when receiving an instruction to switch channels through the channel up/down key while a broadcast program recorded on the recording medium is being reproduced, the reproducing controller calculates a reproduction start position in the recording medium of digital broadcasting signals of a broadcast program from a channel, to which a channel of the broadcast program being reproduced is to be switched, as the record position corresponding to the time information of the metadata of the digital broadcasting signals of the broadcast program being reproduced, to read the recording medium, and
when receiving an instruction to skip programs through the skip key while a broadcast program recorded on the recording medium is being reproduced, the reproducing controller calculates a reproduction start position in the recording medium of digital broadcasting signals of a broadcast program from a program, to which a program of the broadcast program being reproduced is to be skipped, as the record position corresponding to a start position a program obtained from the program information of the metadata of the digital broadcasting signals of a broadcast program, to which a program is skipped based on the program information of the metadata of the digital broadcasting signals of the broadcast program being reproduced, to read the recording medium.

## Patentansprüche

1. Programmaufzeichnungs-Steuergerät (101), mit:
einer Vielzahl von Empfängern (102, 112, 122, 132), konfiguriert zum Empfangen von Transportströmen (TS) digitaler Rundfunksignale von Rundfunkprogrammen von einer Vielzahl von jeweiligen Kanälen;
einer Aufnahmesteuereinrichtung (101), konfiguriert zum Steuern der Aufnahme der digitalen Rundfunksignale, die durch die Empfänger (102, 112, 122, 132) empfangen werden, auf einem Aufnahmemedium (111) und zum Erzeugen von Metadaten in Bezug auf jeden der Kanäle zum Aufnehmen in dem Aufnahmemedium (111), wobei die Metadaten eine Aufnahmeposition in dem Aufnahmemedium (111), Zeitinformationen und Programminformationen umfassen, die aus einer Ereignisinformationstabelle (EIT) der miteinander assoziierten Transportströme erhalten werden;
einem Eingabeprozessor (114), konfiguriert zum Empfangen einer Eingabe von Anweisungen, wobei der Eingabeprozessor (114) zum Empfangen einer Eingabe von Anweisungen mit einer Kanal-Up/Down-Taste (304) verbunden ist, um den Kanal zu erhöhen oder zu verringern, und einer Sprungtaste zum Empfangen einer Eingabe von Anweisungen zum Springen zu dem nächsten Programm oder dem vorhergehenden Programm des gleichen Kanals;
einer Wiedergabesteuereinheit (110), konfiguriert zum Steuern einer Wiedergabe der digitalen Rundfunksignale der Rundfunkprogramme, die in dem Aufnahmemedium (111) aufgenommen sind, oder der digitalen Rundfunksignale der Rundfunkprogramme, welche die Empfänger (102, 112, 122, 132) jeweils von den Kanälen empfangen haben; und
einem Anzeigenprozessor (106), konfiguriert zum Ausgeben der digitalen Rundfunksignale der Rundfunkprogramme, deren Wiedergabe durch die Wiedergabesteuereinheit (110) gesteuert wurde, an ein Anzeigemodul (200), wobei
beim Empfangen einer Anweisung zum Wechseln von Kanälen über die Kanal-Up/Down-Taste (304), während ein in dem Aufnahmemedium (111) aufgenommenes Rundfunkprogramm wiedergegeben wird, die Wiedergabesteuereinheit (110) eine Wiedergabestartposition in dem Aufnahmemedium (111) der digitalen Rundfunksignale eines Rundfunkprogramms von einem Kanal berechnet, zu dem ein Kanal des wiedergegebenen Rundfunkprogramms wechseln soll, als die Aufnahmeposition, die mit der Zeitinformation der Metadaten der digitalen Rundfunksignale des wiedergegebenen Rundfunkprogramms zusammenhängt, um das Aufnahmemedium (111) zu lesen, und wobei
beim Empfangen einer Anweisung zum Springen von Programmen über die Sprungtaste, während ein in dem Aufnahmeprogramm (111) aufgenommenes Rundfunkprogramm wiedergegeben wird, die Wiedergabesteuereinheit (110) eine Wiedergabenstartposition in dem Aufnahmemedium (111) digitaler Rundfunksignale eines Rundfunkprogramms von einem Programm berechnet, zu dem ein Programm der wiedergegebenen Rundfunkprogramms springen soll, als die Aufnahmeposition, die mit einer Startposition eines Programm zusammenhängt, das aus der Programminformation der Metadaten der digitalen Rundfunksignale eines Rundfunkprogramms erhalten wird, zu dem ein Programm auf Grundlage der Programminformation der Metadaten der digitalen Rundfunksignale des wiedergegebenen Rundfunkprogramms sprint, um das Aufnahmemedium (111) zu lesen.

2. Programmaufzeichnungs-Steuereinheit (101) nach Anspruch 1,
ferner mit einem Remultiplexer (141), konfiguriert zum Remultiplexen der Signale der Rundfunkprogramme aus den Kanälen, die jeweils von den Empfängern (102, 112, 122, 132) empfangen werden, in ein Signal, wobei
die Wiedergabesteuereinheit (110) konfiguriert ist zum Steuern der Wiedergabe der Signale nachdem das Signal in die Signale der Rundfunkprogramme von den Kanälen demultiplext ist.

3. Programmaufzeichnungs-Steuereinheit (101) nach Anspruch 1, ferner mit einem Anzeigemodul (200), das konfiguriert ist zum Anzeigen der Signale der von dem Anzeigenprozessor (106) empfangenen Rundfunkprogramme.

4. Programmaufzeichnungs-Steuerverfahren, angewendet in einer Programmaufzeichnungs-Steuereinheit mit einer Steuereinheit und einem Aufnahmemedium, wobei das Programmaufzeichnungs-Steuerverfahren die Schritte umfasst zum:
Steuern, an einer Aufnahmesteuereinheit (110), der Aufnahme der digitalen Rundfunksignale, die durch eine Vielzahl von Empfängern empfangen werden, die Transportströme (TS) digitaler Rundfunksignale von Rundfunkprogrammen einer Vielzahl von Kanälen empfangen, jeweils in einem Aufnahmemedium;
Erzeugen von Metadaten mit Bezug auf jeden der Kanäle, zum Aufnehmen in dem Aufnahmemedium, wobei die Metadaten eine Aufnahmeposition in dem Aufnahmemedium, Zeitinformationen und Programminformationen umfassen, die aus einer Ereignisinformationstabelle (EIT) der miteinander assoziierten Transportströme erhalten werden;
Steuern, an einer Wiedergabesteuereinheit (110), der Wiedergabe der digitalen Rundfunksignale der in dem Aufnahmemedium aufgenommenen Rundfunkprogramme oder der digitalen Rundfunksignale der Rundfunkprogramme, welche die Empfänger jeweils von den Kanälen empfangen haben, entsprechend einer Anweisung, die von einer Kanal-Up/Down-Taste empfangen wurde, um die Eingabe von Anweisungen zum Erhöhen oder Verringern des Kanals zu empfangen, und von einer Sprungtaste für den Empfang der Eingabe von Anweisungen, um zu dem nächsten Programm oder zu dem vorhergehenden Programm des gleichen Kanals zu springen; und
Ausgeben, an einem Anzeigeprozessor (106), der digitalen Rundfunksignale der Rundfunkprogramme, deren Wiedergabe durch die Wiedergabesteuereinheit gesteuert wurde, an ein Anzeigemodul, wobei
beim Empfangenen einer Anweisung zum Wechseln von Kanälen über die Kanal-Up/Down-Taste, während ein in dem Aufnahmemedium aufgenommenes Rundfunkprogramm wiedergegeben wird, die Wiedergabesteuereinheit eine Wiedergabestartposition in dem Aufnahmemedium der digitalen Rundfunksignale eines Rundfunkprogramms von einem Kanal berechnet, zu dem ein Kanal des wiedergegebenen Rundfunkprogramms wechseln soll, als die Aufnahmeposition, die mit der Zeitinformation der Metadaten der digitalen Rundfunksignale des wiedergegebenen Rundfunkprogramms zusammenhängt, um das Aufnahmemedium (111) zu lesen, und wobei
beim Empfang einer Anweisung zum Springen von Programmen über die Sprungtaste, während ein in dem Aufnahmeprogramm aufgenommenes Rundfunkprogramm wiedergegeben wird, die Wiedergabesteuereinheit eine Wiedergabenstartposition in dem Aufnahmemedium digitaler Rundfunksignale eines Rundfunkprogramms von einem Programm berechnet, zu dem ein Programm der wiedergegebenen Rundfunkprogramms springen soll, als die Aufnahmeposition, die mit einer Startposition eines Programm zusammenhängt, das aus der Programminformation der Metadaten der digitalen Rundfunksignale eines Rundfunkprogramms erhalten wird, zu dem ein Programm auf Grundlage der Programminformation der Metadaten der digitalen Rundfunksignale des wiedergegebenen Rundfunkprogramms sprint, um das Aufnahmemedium zu lesen.

## Revendications

1. Dispositif de commande d'enregistrement de programme (101), comprenant :
une pluralité de récepteurs (102, 112, 122, 132) configurés pour recevoir des flux de transport (TS) de signaux de diffusion numérique de programmes diffusés à partir de canaux multiples, respectivement ;
un dispositif de commande d'enregistrement (110) configuré pour commander l'enregistrement des signaux de diffusion numérique reçus par les récepteurs (102, 112, 122, 132) sur un support d'enregistrement (111) et pour créer des métadonnées par rapport à chacun des canaux pour enregistrer dans le support d'enregistrement (111), les métadonnées contenant une position d'enregistrement dans le support d'enregistrement (111), des informations de temps, et des informations de programme obtenues à partir d'une table d'informations d'événement (EIT) des flux de transport associés l'un à l'autre ;
un processeur d'entrée (114) configuré pour recevoir une entrée d'instructions, le processeur d'entrée (114) étant raccordé à une touche haut/bas de canal (304) pour recevoir l'entrée d'instructions pour monter ou descendre le canal et une touche de saut pour recevoir l'entrée d'instructions pour sauter au programme suivant ou au programme précédent du même canal ;
un dispositif de commande de reproduction (110) configuré pour commander la reproduction des signaux de diffusion numérique des programmes diffusés enregistrés sur le support d'enregistrement (111) ou des signaux de diffusion numérique des programmes diffusés que les récepteurs (102, 112, 122, 132) ont reçu des canaux, respectivement ; et
un processeur d'affichage (106) configuré pour fournir les signaux de diffusion numérique des programmes diffusés, dont la reproduction a été commandée par le dispositif de commande de reproduction (110), à un module d'affichage (200), dans lequel
lors de la réception d'une instruction pour commuter des canaux grâce à la touche haut/bas de canal (304) alors qu'un programme diffusé enregistré sur le support d'enregistrement (111) est reproduit, le dispositif de commande de reproduction (110) calcule une position de démarrage de reproduction dans le support d'enregistrement (111) de signaux de diffusion numérique d'un programme diffusé à partir d'un canal, auquel un canal du programme diffusé étant reproduit doit être commuté, comme la position d'enregistrement correspondant aux informations de temps des métadonnées des signaux de diffusion numérique du programme diffusé étant reproduit, pour lire le support d'enregistrement (111), et
lors de la réception d'une instruction pour sauter des programmes à travers la touche de saut alors qu'un programme diffusé enregistré sur le support d'enregistrement (111) est reproduit, le dispositif de commande de reproduction (110) calcule une position de début de reproduction dans le support d'enregistrement (111) de signaux de diffusion numérique d'un programme diffusé à partir d'un programme, auquel un programme du programme diffusé étant reproduit doit être sauté, comme la position d'enregistrement correspondant à une position de début d'un programme obtenue à partir des informations de programme des métadonnées des signaux de diffusion numérique d'un programme diffusé, auquel un programme est sauté sur la base des informations de programme des métadonnées des signaux de diffusion numérique du programme diffusé étant reproduit, pour lire le support d'enregistrement (111).

2. Dispositif de commande d'enregistrement de programme (101) selon la revendication 1, comprenant en outre un remultiplexeur (141) configuré pour remultiplexer les signaux des programmes de diffusion à partir des canaux reçus par les récepteurs (102, 112, 122, 132), respectivement, en un signal, dans lequel
le dispositif de commande de reproduction (110) est configuré pour commander la reproduction des signaux après que le signal soit démultipléxé en signaux des programmes de diffusion à partir des canaux.

3. Dispositif de commande d'enregistrement de programme (101) selon la revendication 1, comprenant en outre un module d'affichage (200) configuré pour afficher les signaux des programmes de diffusion reçus du processeur d'affichage (106).

4. Procédé de commande d'enregistrement de programme appliqué à un dispositif de commande d'enregistrement de programme comprenant un dispositif de commande et un support d'enregistrement, le procédé de commande d'enregistrement de programme comprenant les étapes de :
commande, sur un dispositif de commande d'enregistrement (110), d'un enregistrement des signaux de diffusion numérique reçus par une pluralité de récepteurs qui reçoivent les flux de transport (TS) de signaux de diffusion numérique de programmes de diffusion à partir de multiples canaux, respectivement sur un support d'enregistrement ;
création de métadonnées par rapport à chacun des canaux pour enregistrer dans le support d'enregistrement, les métadonnées contenant une position d'enregistrement dans le support d'enregistrement, des informations de temps, et des informations de programme obtenues à partir d'une table d'informations d'événement (EIT) des flux de transport associés l'un à l'autre ;
commande, sur un dispositif de commande de reproduction (110), d'une reproduction des signaux de diffusion numérique des programmes diffusés enregistrés sur le support d'enregistrement ou les signaux de diffusion numérique des programmes diffusés que les récepteurs ont reçu à partir des canaux, respectivement, selon une instruction reçue par une touche haut/bas de canal pour recevoir une entrée d'instructions pour monter ou descendre le canal et une touche de saut pour recevoir une entrée d'instructions pour sauter au programme suivant ou au programme précédent du même canal ; et
fourniture, sur un processeur d'affichage (106), des signaux de diffusion numérique des programmes diffusés, dont la reproduction a été commandée par le dispositif de commande de reproduction, au module d'affichage, dans lequel
lors de la réception d'une instruction pour commuter des canaux via la touche haut/bas de canal alors qu'un programme diffusé enregistré sur le support d'enregistrement est reproduit, le dispositif de commande de reproduction calcule une position de début de reproduction dans le support d'enregistrement de signaux de diffusion numérique d'un programme diffusé à partir d'un canal, auquel un canal du programme diffusé étant reproduit doit être commuté, comme la position d'enregistrement correspondant aux informations de temps des métadonnées des signaux de diffusion numérique du programme diffusé reproduit, pour lire le support d'enregistrement, et
lors de la réception d'une instruction pour sauter des programmes via la touche de saut alors qu'un programme diffusé enregistré sur le support d'enregistrement est reproduit, le dispositif de commande de reproduction calcule une position de début de reproduction dans le support d'enregistrement de signaux de diffusion numérique d'un programme diffusé d'un programme, auquel un programme du programme diffusé étant reproduit doit être sauté, comme la position d'enregistrement correspondant à une position de début d'un programme obtenue à partir des informations de programme des métadonnées des signaux de diffusion numérique d'un programme diffusé, auquel un programme est sauté sur la base des informations de programme des métadonnées des signaux de diffusion numérique du programme diffusé reproduit, pour lire le support d'enregistrement.
